# EUROPÄISCHE PATENTSCHRIFT

(11) **EP 3 021 038 B1**
(45) Veröffentlichungstag und Bekanntmachung des Hinweises auf die Patenterteilung: **02.08.2017**
(21) Anmeldenummer: 14193439.8
(22) Anmeldetag: 17.11.2014
(51) Int. Cl.: F21S 6/00, F16B 9/02, F16M 11/22, F21V 17/00, F21V 21/06, F21V 21/10, F21S 8/08

(54) **Arbeitsplatzstehleuchte**
Standing lamp for workplace
Luminaire de poste de travail

(43) Veröffentlichungstag der Anmeldung: 18.05.2016
(73) Patentinhaber: Jakob Maul GmbH, 64732 Bad König-Zell (DE)
(72) Erfinder: Wassum, Jens, 64720 Michelstadt (DE)
(74) Vertreter: Jeck, Anton

(56) Entgegenhaltungen:
- EP-A1- 1 347 232
- WO-A1-94/01715
- US-A1- 2005 150 388
- US-A1- 2013 322 097
- US-B1- 6 357 896
- US-B1- 6 811 347

## Beschreibung

Die Erfindung betrifft eine Arbeitsplatzstehleuchte mit einem Leuchtenfuß und einem Leuchtenkopf, die über eine vertikale Säule miteinander verbunden sind. Solche Stehleuchte sind z.B. aus US6357896 bekannt. Bei den bekannten Arbeitsplatzstehleuchten dieser Art verbinden durchgängige einstückige Säulen den Leuchtenfuß mit dem Leuchtenkopf. Gerade diese einstückige Säule bestimmt beim Versand der zerlegten Teile der Arbeitsplatzstehleuchte mit ihrer Länge die Größe der Verpackung und damit auch die Versandkosten. Zudem ist die Verpackung mit den zerlegten Teilen der Arbeitsplatzstehleuchte in der Handhabung recht unhandlich.

Es ist Aufgabe der Erfindung, eine Arbeitsplatzstehleuchte mit ihren Teilen zu entwickeln, die im zerlegten Zustand in einer wesentlich kleineren Verpackung versandt werden kann und damit die Versandkosten zu reduzieren und den Versand wesentlich besser zu handhaben, ohne dass am Einsatzort die Montage der Arbeitsplatzstehleuchte erschwert wird.

Die gestellte Aufgabe wird durch die Merkmale des Anspruchs 1 gelöst.

Dies ist erfindungsgemäß dadurch erreicht, dass die Säule aus einem unteren Säulenteil und einem oberen Säulenteil zusammengesetzt ist, dass die Säulenteile über ein Verbindungsstück miteinander verbindbar sind, wobei das Verbindungsstück mit dem unteren Ende des oberen Säulenteils fest verschraubbar ist und eine fest verschraubte, nicht lösbare Schraube trägt, die an der Unterseite des Verbindungsstücks herausragt, auf die eine im unteren Säulenteil untergebrachte Verbindungssäule aufschraubbar ist, dass der Leuchtenfuß mit dem unteren Ende des unteren Säulenteils verschraubbar ist und eine Befestigungsschraube aufnimmt, die in den unteren Teil der Verbindungssäule einschraubbar ist, die nicht bis zum Leuchtenfuß reicht, dass mit der Befestigungsschraube des Leuchtenfußes das Verbindungsstück mit dem Leuchtenfuß verspannbar und festlegbar ist und dass mittels Befestigungsschrauben der Leuchtenkopf mit der Stirnseite des oberen Säulenteils verbindbar ist.

Auf diese Weise lassen sich die Teile der Arbeitsplatzstehleuchte zerlegt in einer wesentlich kleineren Verpackung versenden, ohne am Einsatzort den Zusammenbau, d. h. die Montage, zu der Arbeitsplatzstehleuchte für die Aufstellung auf einer Arbeitsplatte am Arbeitsplatz zu erschweren.

Vorteilhafte Weiterbildungen der Arbeitsplatzstehleuchte sind den Unteransprüchen zu entnehmen.

Die Säulenteile können als Vierkant-Hohlprofilabschnitte ausgebildet sein, wobei der untere Säulenteil in die untere Stirnseite eingebrachte Innengewinde und der obere Säulenteil in die obere Stirnseite eingebrachte Innengewinde aufweisen, in die Befestigungsschrauben zum Anbringen des Leuchtenfußes und des Leuchtenkopfes einschraubbar sind, wobei die Gewindeaufnahmen eine Einschraubtiefe aufweisen, die größer ist als die maximale Einschraubtiefe der Befestigungsschrauben.

Die Verbindung im Bereich des Verbindungsstücks ist dabei so ausgeführt, dass das Verbindungsstück an den Querschnitt des Innenraums des oberen und des unteren Säulenteils angepasst ist und teilweise in diese ragt. Die Befestigungsschrauben für das Verbindungsstück am unteren Ende des oberen Säulenteils sind in einem erweiterten Mittelabschnitt des Verbindungsstücks eingebracht, der mit den Außenflächen des unteren und des oberen Säulenteils bündig abschließt. In die untere Stirnseite des oberen Säulenteils sind Gewindeaufnahmen für die Befestigungsschrauben eingebracht, und die Befestigungsschrauben verbinden das Verbindungsstück fest mit der zugekehrten Stirnseite des oberen Säulenteils. Dabei richtet das Verbindungsstück die beiden Säulenteile axial aus.

Die Verbindungssäule im unteren Säulenteil kann als Hohlprofil ausgebildet sein. Die Schraube im Verbindungsstück und die Schraube zum Verspannen des Leuchtenfußes können dabei in die Verbindungssäule mit vorgeschnittenem Gewinde eingeschraubt werden.

Es kann jedoch auch vorgesehen sein, dass die Verbindungssäule als Verbindungsstange ausgebildet ist, die an den beiden Enden mit Gewindeaufnahmen für den Gewindeansatz des Verbindungsstücks und die Befestigungs-schraube für den Leuchtenfuß versehen ist. Auch hier ist die Tiefe der Gewindeaufnahmen größer als die maximale Einschraubtiefe des Gewindeansatzes am Verbindungsstück und der Befestigungsschraube für den Leuchtenfuß.

Die Erfindung wird anhand von Zeichnungen an einem Ausführungsbeispiel näher erläutert. Es zeigen:
- Fig. 1: in Ansicht die zusammengebaute Arbeitsplatzstehleuchte,
- Fig. 2: das Detail X der Verbindung des unteren Säulenteils mit dem oberen Säulenteil über das Verbindungsstück,
- Fig. 3: das Detail Y der Verbindung des Leuchtenfußes mit dem unteren Ende des unteren Säulenteils und
- Fig. 4: das Detail Z der Verbindung des Leuchtenkopfes mit dem oberen Ende des oberen Säulenteils.

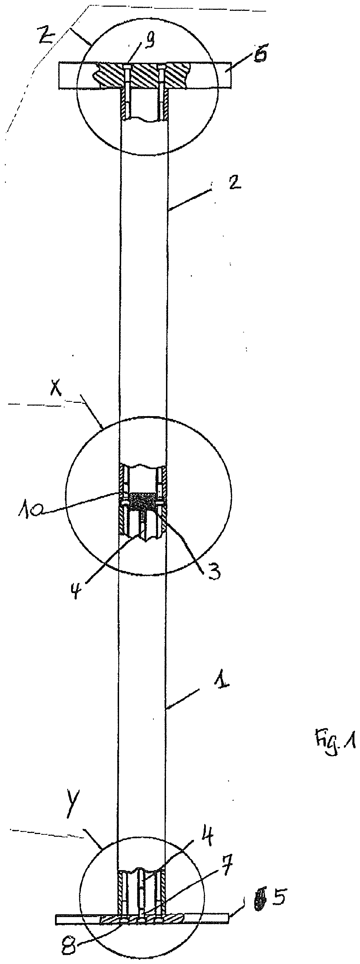

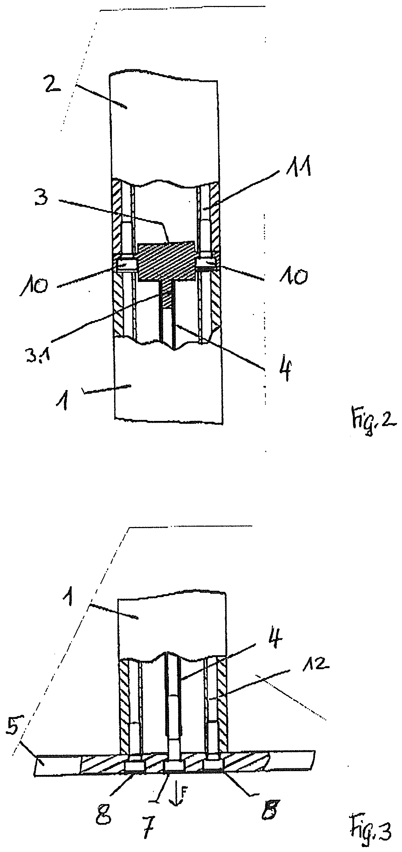

Die Fig. 1 zeigt die Arbeitsplatzstehleuchte im zusammengesetzten Zustand. Die Säule zwischen Leuchtenfuß 5 und Leuchtenkopf 6 besteht aus zwei gleich oder unterschiedlich langen Säulenteilen 1 und 2, die über ein Verbindungsstück 3 miteinander verbunden sind. Diese Verbindungsstelle der beiden Säulenteile 1 und 2 im Bereich des Verbindungs-stücks 3 ist als Detail X bezeichnet und in Fig. 2 vergrößert dargestellt.

Wie die Fig. 2 zeigt, ragt das Verbindungsstück 3 mit Teilen sowohl in den unteren Säulenteil 1 als auch in den oberen Säulenteil 2. Ein mittlerer Teil des Verbindungsstücks 3 liegt zwischen der oberen Stirnseite des unteren Säulenteils 1 und der unteren Stirnseite des oberen Säulenteils 2 und schließt bündig mit den Außenflächen der Säulenteile 1 und 2 ab, wobei die Säulenteile 1 und 2 vorzugsweise als Vierkant-Hohlprofilabschnitte ausgebildet sein können. Entscheidend ist dabei, dass das Verbindungsstück 3 fest mit dem unteren Ende des oberen Säulenteils 2 verbindbar ist. Dazu sind Befestigungsschrauben 10 verwendet, die in Durchgangsaufnahmen im Mittelteil des Verbindungsstücks 3 eingeführt und in Gewindeaufnahmen 11 eingeschraubt sind, die in die unteren Stirnseite des oberen Säulenteils 2 eingebracht sind. An den in den unteren Säulenteil 1 ragenden Teil des Verbindungsstücks 3 ist ist ein Innengewinde eingebracht, in das eine Schraube 3.1 eingeschraubt ist, auf die eine im unteren Säulenteil 1 angeordnete Verbindungssäule 4 aufgeschraubt ist. Wie aus der Fig. 2 abgeleitet werden kann, ist das Verbindungsstück 3 auch schon in der zerlegten Versandstellung fest mit dem oberen Säulenteil 2 verbunden, da dadurch die Verpackung nur in verschwindend kleinerem Maße zu vergrößern ist.

Ein weiterer wichtiger Punkt, der zu beachten ist, geht aus dem in Fig. 3 gezeigten vergrößerten Detail Y hervor. Dieses Detail zeigt, wie der Leuchtenfuß 5 mit dem unteren Ende des unteren Säulenteils 1 zu verbinden ist. Die Verbindungssäule 4 reicht nicht bis zum Leuchtenfuß 5, so dass mit der Befestigungsschraube 7 der Leuchtenfuß 5 mit dem Verbindungsstück 3 verspannt und festgelegt werden kann. Die Verbindungssäule 4 ist vor dem Anbringen des Leuchtenfußes 5 schon fest mit dem Verbindungsstück 3 verbunden. Der Leuchtenfuß 5 liegt an der unteren Stirnseite des unteren Säulenteils 1 an, so dass der Befestigungsschraube 7 ein ausreichend großer Raum zur Erzeugung der Spannkraft F gegeben ist. Die Verbindungssäule 4 hat stets einen Abstand zum Leuchtenfuß 5. Die Verbindungssäule 4 kann dabei als Rundrohrabschnitt ausgebildet sein und an beiden Enden Gewindeaufnahmen tragen, deren Tiefe größer ist als die maximale Einschraubtiefen der Schraube 3.1 des Verbindungsstücks 3 und der Befestigungsschraube 7 im Leuchtenfuß 5. Die Schraube 3.1 und die Befestigungsschraube 7 sind in die Verbindungssäule 4 einschraubbar. Der Leuchtenfuß 5 ist mit zusätzlichen Befestigungsschrauben 8 an der Unterseite des unteren Säulenteils 1 anschraubbar, wobei in die Stirnseite des unteren Säulenteils 1 wieder entsprechend bemessene Gewindeaufnahmen 12 eingebracht sind.

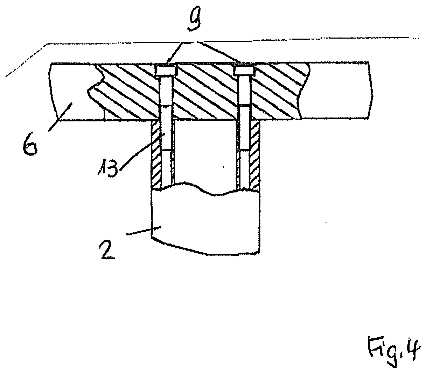

Schließlich ist der Leuchtenkopf 6 mittels Befestigungsschrauben 9 an der oberen Stirnseite des oberen Säulenteils 2 festschraubbar, wie der Fig. 4 zu entnehmen ist, die das Detail Z vergrößert wiedergibt. Die Befestigungsschrauben 9 sind in entsprechend ausgebildete Gewindeaufnahmen 13 einschraubbar, die in die obere Stirnseite des oberen Säulenteils 2 eingebracht sind.

Bei der Montage der zerlegten Teile der Arbeitsplatzstehleuchte wird in folgender Weise vorgegangen:
1. Der Leuchtenkopf 6 wird mit den Befestigungsschrauben 9 mit der oberen Stirnseite des oberen Säulenteils 2 mit dem vormontierten Verbindungsstück 3 verbunden, wobei die Befestigungsschrauben 9 in die Innengewinde 13 des oberen Säulenteils 2 eingeschraubt werden.
2. Die Verbindungssäule 4 wird auf die Schraube 3.1 im Verbindungstück 3 aufgeschraubt.
3. Das untere Säulenteil 1 wird auf die Verbindungssäule 4 aufgeschoben und auf das Verbindungsstück 3 aufgesteckt.
4. Die Befestigungsschraube 7 wird durch den Leuchtenfuß 5 eingeführt und mit der Verbindungssäule 4 vormoniert, jedoch nicht festgezogen.
5. Der Leuchtenfuß 5 wird mit den Befestigungsschrauben 8 mit der unteren Stirnseite des unteren Säulenteils 1 verbunden, wobei die Befestigungsschrauben 8 in die Innengewinde 12 des unteren Säulenteils 1 eingeschraubt werden.
6. Über die Anzugskraft F der Befestigungsschraube 7 im Leuchtenfuß 5 wird die Verbindungssäule 4 am Verbindungsstück 3 und das Säulenteil 2 mit dem Säulenteil 1 verspannt.

## Patentansprüche

1. Arbeitsplatzstehleuchte mit einem Leuchtenfuß (5) und einem Leuchtenkopf (6), die über eine vertikale Säule miteinander verbunden sind,
**dadurch gekennzeichnet,**
**dass** die Säule aus einem unteren Säulenteil (1) und einem oberen Säulenteil (2) mit gleichen oder unterschiedlichen Längen zusammengesetzt ist,
**dass** die Säulenteile (1, 2) über ein Verbindungsstück (3) miteinander verbindbar sind, wobei das Verbindungsstück (3) mit dem unteren Ende des oberen Säulenteils (2) fest verschraubt und auf der Unterseite eine Schraube (3.1) trägt, die auf der Unterseite des Verbindungsstücks (3) herausragt, auf die eine im unteren Säulenteil (1) untergebrachte Verbindungssäule (4) aufschraubbar ist,
**dass** der Leuchtenfuß (5) mit dem unteren Ende des unteren Säulenteils (1) verschraubbar ist und eine Befestigungsschraube (7) aufnimmt, die in den unteren Teil der Verbindungssäule (4) einschraubbar ist, die nicht bis zum Leuchtenfuß (5) reicht,
**dass** mit der Befestigungsschraube (7) des Leuchtenfußes (5) das Verbindungsstück (3) mit dem Leuchtenfuß (5) verspannbar und festlegbar ist und
**dass** mittels Befestigungsschrauben (9) der Leuchtenkopf (6) mit der oberen Stirnseite des oberen Säulenteils (2) verbindbar ist.

2. Arbeitsplatzstehleuchte nach Anspruch 1,
**dadurch gekennzeichnet,**
**dass** die Säulenteile (1, 2) als Vierkant-Hohlprofilabschnitte ausgebildet sind, wobei der untere Säulenteil (1) in die untere Stirnseite eingebrachte Gewindeaufnahmen (12) und der obere Säulenteil (2) in die obere Stirnseite eingebrachte Gewindeaufnahmen (13) aufweisen, in die Befestigungsschrauben (8 und 9) zum Anbringen des Leuchtenfußes (5) und des Leuchtenkopfes (6) einschraubbar sind und
**dass** die Gewindeaufnahmen (12, 13) eine Einschraubtiefe aufweisen, die größer ist als die maximale Einschraubtiefe der Befestigungsschrauben (8 und 9).

3. Arbeitsplatzstehleuchte nach Anspruch 1 und 2,
**dadurch gekennzeichnet,**
**dass** das Verbindungsstück (3) an den Querschnitt des Innenraums des oberen und des unteren Säulenteils (2, 1) angepasst ist und in diese Innen-räume teilweise ragt,
**dass** die Befestigungsschrauben (10) für das Befestigen des Verbindungsstücks (3) am unteren Ende des oberen Säulenteils (2) in einem erweiterten Endabschnitt des Verbindungsstücks (3) eingebracht sind, dessen Außenflächen mit den Außenflächen der unteren und der oberen Säulenteile (1, 2) abschließen,
**dass** in die untere Stirnseite des oberen Säulenteils (2) Gewindeaufnahmen (11) für die Befestigungsschrauben (10) eingebracht sind,
**dass** die Befestigungsschrauben (10) das Verbindungsstück (3) fest mit der zugekehrten unteren Stirnseite des oberen Säulenteils (2) verbinden und
**dass** das Verbindungsstück (3) die Säulenteile (1, 2) axial ausrichtet.

4. Arbeitsplatzstehleuchte nach Anspruch 1 bis 3
**dadurch gekennzeichnet,**
**dass** die Verbindungssäule (4) als Hohlprofil ausgebildet ist, in das die Schraube (3.1) des Verbindungsstücks (3) und die Befestigungsschraube (7) im Bereich des Leuchtenfußes (5) einschraubbar sind.

5. Arbeitsplatzstehleuchte nach Anspruch 1 bis 3,
**dadurch gekennzeichnet,**
**dass** die Verbindungssäule (4) als Verbindungsstange ausgebildet und am unteren und oberen Ende mit Gewindeaufnahmen versehen ist, deren Tiefe größer ist als die maximale Einschraubtiefe der Befestigungsschraube (7) des Leuchtenfußes (5) und der Schraube (3.1) des Verbindungsstücks (3).

## Claims

1. A workplace standing lamp with a lamp base (5) and a lamp head (6), which are connected with each other via a vertical column,
**characterized in**
**that** the column is composed of a lower column part (1) and an upper column part (2) with the same or different lengths,
**that** the column parts (1, 2) are connected with each other via a connecting piece (3), wherein the connecting piece (3) is screwed together securely with the lower end of the upper column part (2) and on the lower side bears a screw (3.1), which protrudes on the lower side of the connecting piece (3), on which a connecting column (4) accommodated in the lower column part (1) can be screwed,
**that** the lamp base (5) can be screwed together with the lower end of the lower column part (1) and receives a fastening screw (7), which can be screwed into the lower part of the connecting column (4), which does not extend up to the lamp base (5),
**that** with the fastening screw (7) of the lamp base (5) the connecting piece (3) can be clamped and secured with the lamp base (5) and
**that** by means of fastening screws (9) the lamp head (6) can be connected with the upper end face of the upper column part (2).

2. A workplace standing lamp according to Claim 1,
**characterized in**
**that** the column parts (1, 2) are designed as square hollow profile sections, wherein the lower column part (1) has threaded receptacles (12) introduced into the lower end face and the upper column part (2) has threaded receptacles (13) introduced into the upper end face, into which fastening screws (8 and 9) can be screwed for attaching the lamp base (5) and the lamp head (6) and
**that** the threaded receptacles (12, 13) have a screwing-in depth, which is greater than the maximum screwing-in depth of the fastening screws (8 and 9).

3. A workplace standing lamp according to Claim 1 and 2,
**characterized in**
**that** the connecting piece (3) is adapted to the cross section of the inner space of the upper and of the lower column part (2, 1) and partially extends into these inner spaces,
**that** the fastening screws (10) for the fastening of the connecting piece (3) on the lower end of the upper column part (2) are introduced in an expanded end section of the connecting piece (3), the outer surfaces of which conclude with the outer surfaces of the lower and of the lower column parts (1, 2),
**that** threaded receptacles (11) for the fastening screws (10) are introduced into the lower end face of the upper column part (2),
**that** the fastening screws (10) are securely connected with the facing lower end face of the upper column part (2) and
**that** the connecting piece (3) axially aligns the column parts (1, 2).

4. A workplace standing lamp according to Claim 1 to 3,
**characterized in**
**that** the connecting column (4) is designed as a hollow profile, into which the screw (3.1) of the connecting piece (3) and the fastening screw (7) can be screwed in the area of the lamp base (5).

5. A workplace standing lamp according to Claim 1 to 3,
**characterized in**
**that** the connecting column (4) is designed as a connecting rod and is provided on the lower and upper end with threaded receptacles, the depth of which is greater than the maximum screwing-in depth of the fastening screw (7) of the lamp base (5) and of the screw (3.1) of the connecting piece (3).

## Revendications

1. Lampadaire de poste de travail avec un pied de lampadaire (5) et une tête de lampadaire (6), qui sont reliés entre eux par l'intermédiaire d'une colonne verticale,
**caractérisé en ce que**
la colonne est constituée d'une partie de colonne inférieure (1) et d'une partie de colonne supérieure (2) avec des longueurs égales ou des longueurs différentes,
les parties de colonne (1, 2) peuvent être reliées entre elles par l'intermédiaire d'un élément de liaison (3), l'élément de liaison (3) étant vissé avec l'extrémité inférieure de la partie de colonne inférieure (2) et comprenant, sur son côté inférieur, une vis (3.1) qui dépasse sur le côté inférieur de l'élément de liaison (3), sur lequel une colonne de liaison (4) logée dans la partie de colonne inférieure (1) peut être vissée,
le pied du lampadaire (5) peut être vissé avec l'extrémité inférieure de la partie de colonne inférieure (1) et loge une vis de fixation (7), qui peut être vissée dans la partie inférieure de la colonne de liaison (4), qui ne va pas jusqu'au pied du lampadaire (5),
la vis de fixation (7) du pied du lampadaire (5) permettant de serrer et de fixer l'élément de liaison (3) avec le pied du lampadaire (5) et des vis de fixation (9) permettent de relier la tête du lampadaire (6) avec la face frontale supérieure de la partie de colonne supérieure (2).

2. Lampadaire de poste de travail selon la revendication 1, **caractérisé en ce que** les parties de colonne (1, 2) sont conçues comme des sections à profils creux carrés, la partie de colonne inférieure (1) comprenant des logements filetés (12) intégrés dans la face frontale inférieure et la partie de colonne supérieure (2) comprenant des logements filetés (13) intégrés dans la face frontale supérieure et les vis de fixation (8 et 9) pouvant être vissées pour le montage du pied du lampadaire (5) et de la tête du lampadaire (6) et
les logements filetés (12, 13) présentent une profondeur de vissage qui est supérieure à la profondeur de vissage maximale des vis de fixation (8 et 9).

3. Lampadaire de poste de travail selon la revendication 1 et 2, **caractérisé en ce que** l'élément de liaison (3) est adapté à la section de l'espace interne de la partie de colonne supérieure et inférieure (2, 1) et dépasse dans ces espaces internes,
les vis de fixation (10) sont insérées, pour la fixation de l'élément de liaison (3) à l'extrémité inférieure de la partie de colonne supérieure (2) dans une section d'extrémité élargie de l'élément de liaison (3), dont les surfaces externes se terminant avec les surfaces externes des parties de colonne inférieure et supérieure (1, 2).
dans la face frontale inférieure de la partie de colonne supérieure (2) sont insérés des logements filetés (11) pour les vis de fixation (10),
les vis de fixation (10) relient l'élément de liaison (3) avec la face frontale de la partie de colonne supérieure (2) et **en ce que** l'élément de liaison (3) aligne les parties de colonne (1, 2) de manière axiale.

4. Lampadaire selon la revendication 1 à 3, **caractérisé en ce que** la colonne de liaison (4) est conçue comme un profilé creux dans lequel la vis (3.1) de l'élément de liaison (3) et la vis de fixation (7) peuvent être vissées au niveau du pied du lampadaire (5).

5. Lampadaire selon la revendication 1 à 3, **caractérisé en ce que** la colonne de liaison (4) est conçue comme une tige de liaison et est munie, au niveau de l'extrémité inférieur et de l'extrémité supérieure, de logements filetés, dont la profondeur est supérieure à la profondeur de vissage maximale de la vis de fixation (7) du pied du lampadaire (5) et la vis (3.1) de l'élément de liaison (3).
